# FASCICULE DE BREVET EUROPEEN

(11) **EP 0 918 994 B1**
(45) Date de publication et mention de la délivrance du brevet: **26.01.2005**
(21) Numéro de dépôt: 98930837.4
(22) Date de dépôt: 11.06.1998
(51) Int. Cl.: G01N 35/04, G01N 35/02, B01L 9/06

(54) **DISPOSITIF POUR LA LECTURE AUTOMATIQUE D'UN CODE D'IDENTIFICATION PORTE PAR DES RECIPIENTS TUBULAIRES**
GERÄT ZUM AUTOMATISCHEN LESEN EINES IDENTIFIKATIONSKODES AUF ROHRFÖRMIGEN BEHÄLTERN
DEVICE FOR AUTOMATIC READING OF AN IDENTIFICATION CODE CARRIED BY TUBULAR CONTAINERS

(30) Priorité: 16.06.1997 FR 9707752
(43) Date de publication de la demande: 02.06.1999
(73) Titulaire: DIAGNOSTICA STAGO (société anonyme), F-92602 Asnières (FR)
(72) Inventeur: ROUSSEAU, Alain, F-75004 Paris (FR); GELIN, Jean-François, F-94000 Créteil (FR)
(74) Mandataire: de Saint-Palais, Arnaud Marie
(86) Numéro de dépôt international: PCT/FR1998/001222
(87) Numéro de publication internationale: WO 1998/058262

(56) Documents cités:
- EP-A- 0 479 622
- EP-A- 0 639 774
- DE-U- 29 622 078
- FR-A- 2 655 151
- US-A- 5 551 828
- US-A- 5 588 555
- PATENT ABSTRACTS OF JAPAN vol. 097, no. 011, 28 novembre 1997 & JP 09 178757 A (SHIBUYA KOGYO CO LTD), 11 juillet 1997

## Description

La présente invention a pour objet un dispositif pour la lecture automatique d'un code d'identification porté par des récipients tubulaires placés dans des casiers ou portoirs circulant sur une chaîne de distribution.

Elle s'applique plus particulièrement, mais non exclusivement, à l'identification automatique des tubes d'échantillons, par exemple de sang, lors de leur introduction dans un automate d'analyse.

Elle concerne également un casier ou portoir spécialement conçu pour permettre cette lecture.

D'une façon générale, on sait que les échantillons de sang à analyser dans un automate d'analyse moderne sont disposés dans des tubes à essais habituellement en verre ou en plastique, refermés par un bouchon. L'identification de ces tubes s'obtient grâce à un code d'identification porté par une étiquette collée sur la paroi cylindrique du tube. Ce code d'identification, par exemple un code à barres, est conçu de manière à pouvoir être lu à distance par un lecteur, par exemple optoélectronique.

Les tubes, munis de leurs étiquettes d'identification, sont disposés dans des portoirs spécialement conçus pour pouvoir être transportés par les convoyeurs qui équipent l'automate d'analyse.

Pour faire en sorte que l'automate puisse identifier les tubes d'échantillons, on a proposé d'effectuer à l'entrée de l'automate une saisie manuelle ou semi-automatisée des données d'identification des tubes, des portoirs et de la position des tubes dans les portoirs. Toutefois, ce type de saisie exige la présence d'un opérateur et présente un niveau élevé de risque d'erreur.

Le brevet DE 296 22 078 décrit un dispositif permettant d'effectuer automatiquement une telle saisie à l'intérieur de l'automate.

Pour supprimer ces inconvénients, on a donc songé à réaliser un système de lecture automatique des données placé dans le trajet du convoyeur d'alimentation de l'automate. Toutefois, un tel résultat implique la résolution du problème résultant du fait que la position angulaire des tubes est indéfinie et qu'en conséquence, l'étiquette portée par le tube n'est pas toujours correctement orientée vis-à-vis du lecteur.

Pour résoudre ce problème, on a donc proposé un lecteur équipé de moyens permettant d'entraîner en rotation le tube pendant la phase de lecture.

Ainsi, le lecteur décrit dans le brevet européen No 0 479 622 fait intervenir un élément d'entraînement rotatif conçu pour venir en prise avec le bouchon du tube au terme d'un mouvement de translation vers le bas.

Il s'avère que cette solution présente un certain nombre d'inconvénients :
- elle est relativement complexe et fait intervenir des moyens compliqués et coûteux,
- elle exige, pour chaque lecture, un temps d'arrêt relativement important et ne permet pas d'assurer des cadences élevées,
- elle exige l'emploi de bouchons spécialement conçus à cet effet.

L'invention a donc plus particulièrement pour but de supprimer ces inconvénients. Elle propose donc à cet effet un dispositif pour la lecture automatique des codes d'identification portés par des récipients tubulaires placés dans des alvéoles verticales d'un portoir au cours du transport de ce portoir par un convoyeur, ce dispositif faisant intervenir des moyens d'entraînement en rotation des récipients à l'intérieur desdites alvéoles au cours d'une phase de lecture par un dispositif de lecture.

Selon l'invention, ce dispositif est caractérisé en ce que :
- le dispositif de lecture est disposé en regard de l'une des faces longitudinales du portoir
- le portoir comprend :
   - d'une part, des ajourements constituant fenêtres réalisés sur ladite face de manière à permettre la lecture par ledit dispositif de lecture des codes d'identification des récipients présents dans le portoir lorsque les fenêtres qui permettent la vision de ces récipients se trouvent dans le champ du dispositif de lecture
   - d'autre part, un orifice en forme de fente qui s'étend sur toute la longueur du portoir.
- des moyens d'entraînement en rotation des récipients comprennent un organe d'entraînement qui s'étend longitudinalement relativement à l'axe de déplacement du portoir et qui est conçu de manière à s'engager au travers du susdit orifice de manière à porter successivement sur la paroi cylindrique des récipients lors du déplacement du portoir par le convoyeur et assurer ainsi leur entraînement en rotation par friction sur leur paroi cylindrique, à l'intérieur du portoir pendant la phase de lecture de leurs codes.

Avantageusement ce dispositif permet en outre, lors de la phase de lecture, d'effectuer une inspection par caméra de laquelle on peut déduire certaines informations sur l'échantillon contenu dans le tube telles que :
- hématocrite,
- remplissage du tube,
- qualité du prélèvement (plasma hémolisé, etc..)..

Avantageusement, les moyens d'entraînement pourront consister en un galet ou une bande sans fin, réalisé en un matériau à haut coefficient de friction et disposé de manière à prendre appui sur la paroi cylindrique d'un tube, lorsque le tube se trouve dans une zone de lecture.

De même, le susdit orifice pourra s'étendre sur toute la longueur de la susdite paroi latérale de manière à permettre la mise en contact successive des moyens d'entraînement sur les tubes sans nécessiter de mouvement alternatif transversal desdits moyens.

Des modes d'exécution de l'invention seront décrits ci-après, à titre d'exemples non limitatifs, avec référence aux dessins annexés dans lesquels :
La figure 1 est une représentation schématique permettant d'illustrer le principe de fonctionnement du dispositif de lecture ;
Les figures 2 et 3 sont deux vues en perspective de côté d'un portoir réalisé en une seule pièce en matière plastique moulée ;
La figure 4 est une coupe selon le plan vertical longitudinal de symétrie du portoir ;
La figure 5 est une coupe horizontale selon A/A de la figure 4 ;
La figure 6 est une coupe verticale selon B/B de la figure 4.

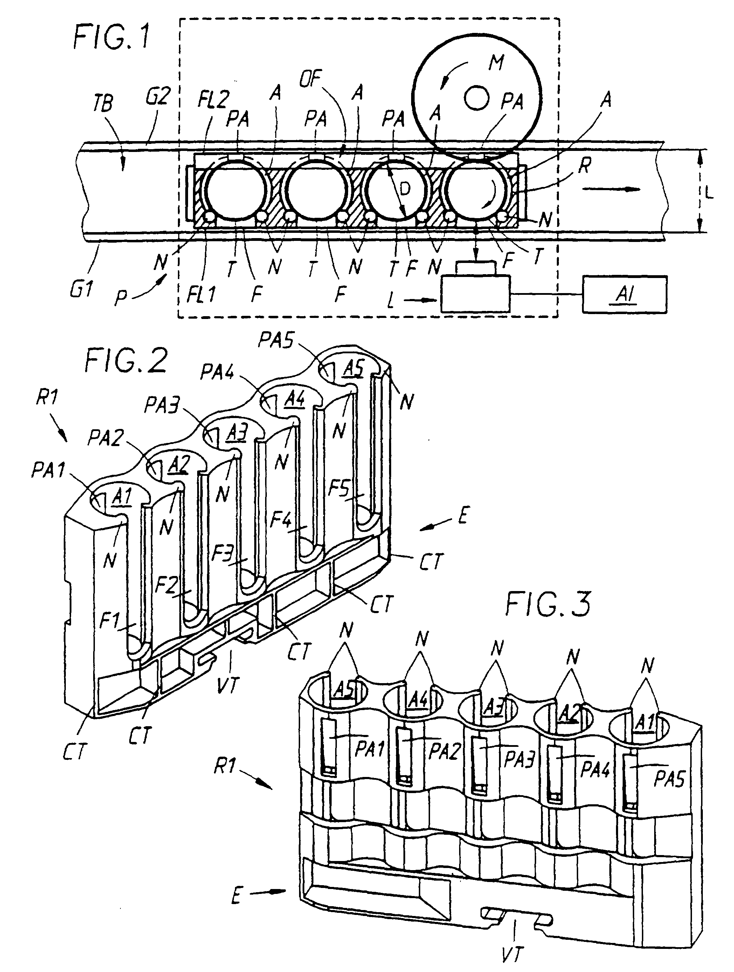

Dans l'exemple illustré sur la figure 1 qui représente, schématiquement en vue de dessus avec coupe horizontale partielle, un poste d'identification P de tubes d'échantillons T contenus dans un portoir R, d'un système de distribution, associé par exemple à un automate d'analyse.

Dans cet exemple, le portoir R se présente sous la forme d'une structure alvéolaire en matière plastique moulée, inscrite dans un parallélépipède rectangle dont la largeur L est légèrement supérieure au diamètre D des tubes T. Il comprend deux faces longitudinales verticales ajourées FL₁, FL₂ entre lesquelles sont conformées cinq alvéoles cylindriques verticales A destinées à recevoir cinq tubes d'échantillons respectifs T.

Les ajourements réalisés sur la face FL₁ s'étendent sur une grande partie de la hauteur des alvéoles A et constituent des fenêtres F destinées à permettre la lecture optique des codes d'identification portés par les parois cylindriques des tubes T et l'inspection du contenu du tube.

Les ajourements réalisés sur la face FL₂ comprennent un orifice en forme de fente OF qui s'étend sur toute la longueur du portoir R.

Le portoir R repose par sa base sur une glissière à bande TB comprenant par exemple une courroie munie de butées, tandis qu'il est guidé latéralement par deux glissières G₁, G₂ et il est entraîné par une courroie munie d'ergots appelée "transporteur". Ce transporteur, actionné par un moteur pas à pas (ou, asservi, un moteur fonctionnant en continu), traverse le poste d'identification P pour amener les portoirs R munis de leurs tubes T à l'entrée de l'automate d'analyse.

Le poste d'identification P, matérialisé ici par un rectangle en traits interrompus, comprend :
- d'une part, un dispositif optoélectronique de lecture L (par exemple une caméra vidéo associée à un analyseur d'images AI ou un lecteur de code d'identification tel qu'un code à barres), disposé d'un côté du convoyeur TB, de manière à pouvoir enregistrer l'image de la paroi cylindrique de chacun des tubes T et de leur contenu chaque fois que la fenêtre F qui permet la vision de ce tube se trouve dans le champ du dispositif de lecture L, et
- d'autre part, un dispositif d'entraînement qui consiste ici en une molette M en une matière résiliente telle que du caoutchouc entraînée en rotation par un moteur électrique ; cette molette M, axée verticalement, est disposée au droit du dispositif de lecture L, de l'autre côté du convoyeur TB de manière à pouvoir s'engager dans l'orifice longitudinal OF du portoir R pour venir porter successivement sur la paroi cylindrique des tubes T et assurer ainsi leur entraînement en rotation.

Pour faciliter cette rotation, ainsi que pour permettre d'assurer un bon positionnement de la face cylindrique du tube T vis-à-vis du dispositif de lecture L, les alvéoles A comprennent deux éléments d'appui verticaux, ici nervurations verticales N, qui s'étendent en saillie de part et d'autre d'un plan de symétrie de la fenêtre F, ainsi qu'une pièce d'appui PA déformable élastiquement, située du côté de l'alvéole A opposé à la fenêtre F ; cette pièce d'appui PA est destinée à maintenir le tube T appliqué contre les bords arrondis du portoir, donc dans une position parfaitement centrée par rapport à la fenêtre F.

Les bords arrondis pourront être remplacées par des galets rotatifs axés verticalement de manière à réduire autant que possible les forces de frottement pouvant s'opposer à la rotation des tubes T et limiter l'accrochage des étiquettes surtout lorsqu'elles sont mal collées.

Lorsque le bord de l'étiquette est légèrement décollé, une partie décollée peut se coller lorsque le tube est entraîné en rotation. Les nervurations sont donc positionnées de façon à éviter le phénomène de collage.

Il est clair que grâce à ces dispositions relativement simples, peu coûteuses et, cependant, efficaces, il devient possible d'obtenir une identification fiable des tubes T, de la position de ces tubes à l'intérieur des portoirs R ainsi qu'une identification des portoirs, par exemple par une lecture d'un code d'identification du portoir par le même dispositif de lecture L.

De même, l'inspection en continu du tube est rendue facile sans risquer de mélanger les cellules (globules) et le plasma séparés préalablement par la centrifugation.

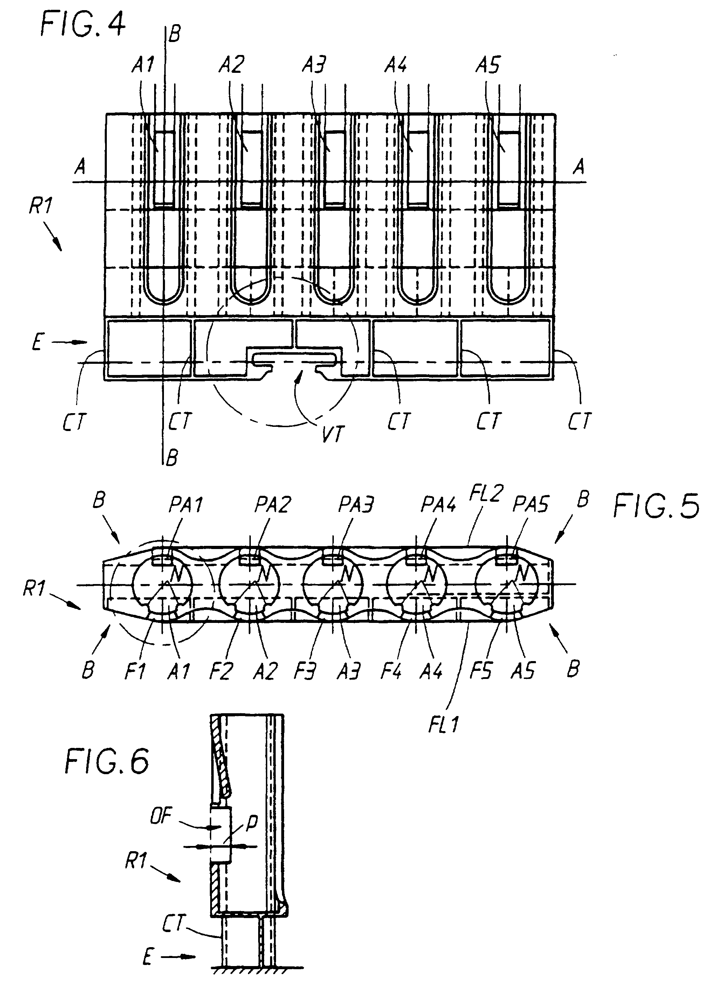

Le portoir R₁ représenté sur les figures 2 à 6, présente une structure similaire à celle précédemment décrite.

Toutefois, dans ce cas, les bordures verticales B de la forme parallélépipédique situées aux deux extrémités sont chanfreinées.

La partie inférieure du portoir R₁ comprend une embase E dont le profil transversal présente une forme en H basculée et qui comprend une série de cloisonnements transversaux CT (raidisseurs) propre à faciliter le passage en centrifugeuse.

Dans sa région centrale, l'embase E est munie d'une nervuration délimitant un volume transversal VT de section sensiblement en forme de C ou en queue d'aronde, destinée à venir coopérer avec un rail de guidage de section complémentaire, par exemple en forme de T.

La partie supérieure du portoir R₁ comprend ici cinq alvéoles cylindriques verticales A₁ à A₅ ouvertes au niveau de la face supérieure du portoir, le diamètre de ces alvéoles A₁ à A₅ étant légèrement supérieur au diamètre des tubes et légèrement inférieur à la largeur du portoir R₁.

Du côté de la face FL₁, ces alvéoles A₁ à A₅ s'ouvrent vers l'extérieur grâce à des fenêtres oblongues F₁ à F₅ qui s'étendent depuis la face supérieure du bac jusqu'au niveau de l'embase.

Ces fenêtres F₁ à F₅ sont destinées à permettre la lecture des codes d'identification inscrits sur la paroi cylindrique des tubes ou sur des étiquettes collées à ces parois.

Du côté de la face FL₂, le portoir R₁ comprend un orifice de section rectangulaire OF₁, qui s'étend horizontalement, à mi-hauteur du portoir R₁, d'une extrémité à l'autre de ce dernier. La profondeur p de cet orifice est prévue de manière à ce qu'une portion de la paroi des tubes se trouve découverte et puisse ainsi coopérer avec un moyen d'entrainement en rotation du type de la molette M représentée figure 1.

Comme dans l'exemple précédemment décrit, les alvéoles A₁ à A₅ comprennent, de part et d'autre des fenêtres F₁ à F₅, des surfaces arrondies N (surfaces rayonnées) sur lesquelles les tubes viennent en appui de préférence tangentiellement, et peuvent tourner en résolvant le problème du décollement partiel de l'étiquette, précédemment évoqué.

A l'opposé de chacune des surfaces arrondies N est prévue une languette flexible PA₁ à PA₅ qui s'étend obliquement légèrement dans le volume intérieur de l'alvéole A₁ à A₅ correspondante pour maintenir le tube appliqué sur les surfaces arrondies quel que soit le diamètre standard existant.

Cette languette PA₁ à PA₅ est venue de moulage avec le reste du portoir.

## Revendications

1. Dispositif pour la lecture automatique des codes d'identification portés par des récipients tubulaires (T) placés dans des alvéoles verticales (A) d'un portoir (R) au cours du transport de ce portoir par un convoyeur (CT), ce dispositif faisant intervenir des moyens d'entraînement en rotation des récipients à l'intérieur desdites alvéoles (A) au cours d'une phase de lecture par un dispositif de lecture (L), **caractérisé en ce que**
- le dispositif de lecture est disposé en regard de l'une des faces longitudinales (FL₁) du portoir (R)
- le portoir (R) comprend :
• d'une part, des ajourements constituant fenêtres (F) réalisés sur ladite face (FL₁) de manière à permettre la lecture par ledit dispositif de lecture (L) des codes d'identification des récipients (T) présents dans le portoir (R) lorsque les fenêtres (F) qui permettent la vision de ces récipients (T) se trouvent dans le champ du dispositif de lecture (L)
• d'autre part, un orifice en forme de fente (OF) qui s'étend sur toute la longueur du portoir (R).
- des moyens d'entraînement en rotation (M) des récipients (T) comprennent un organe d'entraînement qui s'étend longitudinalement relativement à l'axe de déplacement du portoir (R) et qui est conçu de manière à s'engager au travers du susdit orifice (OF) de manière à porter successivement sur la paroi cylindrique des récipients (T) lors du déplacement du portoir par le convoyeur (CT) et assurer ainsi leur entraînement en rotation par friction sur leur paroi cylindrique, à l'intérieur du portoir (R) pendant la phase de lecture de leurs codes.

2. Dispositif selon la revendication 1,
**caractérisé en ce que** les moyens d'entraînement consistent en un galet (M) ou une bande sans fin, réalisé en un matériau à haut coefficient de friction et disposé de manière à prendre appui sur la paroi cylindrique d'un récipient tubulaire (T), lorsque ce récipient se trouve dans une zone de lecture.

3. Dispositif selon la revendication 1,
**caractérisé en ce que** le susdit orifice (OF) s'étend sur toute la longueur de la susdite paroi latérale (FL₁) de manière à permettre la mise en contact successive des moyens d'entraînement (M) sur les récipients (T) sans nécessiter de mouvement alternatif transversal desdits moyens (M).

4. Dispositif selon l'une des revendications précédentes,
**caractérisé en ce que** les susdits ajourements (OF) sont réalisés sur une face longitudinale (FL₁) opposée à la face (FL₂) sur laquelle est réalisée le susdit orifice et **en ce que** les susdits ajourements (OF) s'étendent sur une grande partie des alvéoles de manière à permettre la lecture optique des codes d'indentification des récipients (T) ainsi que l'inspection du contenu desdits récipients.

5. Dispositif selon l'une des revendications précédentes,
**caractérisé en ce que** le portoir (R) se présente sous la forme d'une structure alvéolaire en matière moulée, inscrite dans un parallélépipède rectangle comprenant deux faces verticales longitudinales ajourées (FL₁, FL₂) entre lesquelles sont conformées des alvéoles cylindriques (A) destinées à recevoir les tubes d'échantillons (T), les ajourements réalisés sur l'une desdites faces (FL₁) constituant des fenêtres (F) destinées à permettre la lecture optique des codes d'identification portés par les parois cylindriques des tubes (T) ou une inspection visuelle de leur contenu, tandis que les ajourements réalisés sur la face (FL₂) comprennent un orifice en forme de fente (OF) qui s'étend sur toute la longueur du portoir (R).

6. Dispositif selon la revendication 5,
**caractérisé en ce que** les alvéoles (A) comprennent deux éléments d'appui verticaux et arrondis, ainsi qu'une pièce d'appui (PA) déformable élastiquement, située du côté de l'alvéole (A) opposé à la fenêtre (F).

7. Dispositif selon la revendication 6,
**caractérisé en ce que** les susdits éléments d'appui consistent en des galets rotatifs axés verticalement ou des surfaces rayonnées permettant la rotation des tubes.

8. Dispositif selon la revendication 6,
**caractérisé en ce que** la pièce d'appui consiste en une languette flexible légèrement oblique venue de moulage avec le reste du portoir (R).

9. Portoir destiné à recevoir des récipients tubulaires dont la paroi cylindrique porte un code d'identification destiné à être lu à distance par un lecteur optoélectronique conformément au dispositif selon l'une des revendications 1 à 8,
**caractérisé en ce qu'**il se présente sous la forme d'une structure alvéolaire comprenant deux faces verticales longitudinales entre lesquelles sont conformées des alvéoles cylindriques destinées à recevoir les récipients tubulaires, les ajourements réalisés sur l'une desdites faces comprenant des fenêtres (F) destinées à permettre la lecture optique des codes d'identification et l'inspection optique du contenu des récipients tubulaires, tandis que les ajourements réalisés sur la face (FL₂) comprennent un orifice en forme de fentes qui s'étend sur toute la longueur du portoir (R).

10. Portoir selon la revendication 9,
**caractérisé en ce qu'**il est réalisé en une seule pièce en matière moulée.

11. Portoir selon l'une des revendications 9 et 10,
**caractérisé en ce que** les alvéoles (A) comprennent deux éléments d'appui verticaux arrondis, ainsi qu'une pièce d'appui (PA) déformable élastiquement, située du côté de l'alvéole (A) opposé à la fenêtre (F).

12. Portoir selon la revendication 11,
**caractérisé en ce que** les susdits éléments d'appui consistent en des galets rotatifs axés verticalement ou des surfaces rayonnées permettant la rotation des récipients tubulaires.

13. Portoir selon la revendication 11,
**caractérisé en ce que** la pièce d'appui consiste en une languette flexible légèrement oblique venue de moulage avec le reste du portoir (R).

## Claims

1. Device for the automatic reading of an identification code carried by tubular containers (T) placed in vertical alveolar cells (A) of a carrier unit (R) during the transport of said carrier unit by a conveyor (CT), said device using rotary drive means of the receptacles on the inside of alveolar cells (A) during a reading phase by a reading device (L), **characterized in that**:
- the reading device is located in opposite of one of the longitudinal faces (FL₁) of the carrier unit (R),
- the carrier unit (R) comprises :
• on the one hand, openings constituting windows (F) made on of said sides (FL₁) as so as to permit the reading by said reading device (L) of the identification codes of the containers (T) present in the carrier unit (R) when the windows (F) which enables the containers (T) to be seen, are situated in the field of the reading device (L),
• on the other hand, a slit-shaped opening (OF) which extends over the entire length of the carrier unit.
- rotary drive means (M) of containers (T) comprise a drive element extending longitudinally in relation to the axis of shifting of the carrier unit (R) and designed so as fits through the said opening (OF) so as to successively bear against the cylindrical wall of the containers (T) during the shifting of the carrier unit by the conveyor (CT) and thus achieve their rotary drive by friction on their cylindrical wall, inside of the carrier unit (R) during the reading phase of their codes.

2. Device according the claim1,
**characterised in that** the drive means consists of a roller (M) or an endless belt made in a material with a high coefficient of friction and arranged so as to bear against the cylindrical wall of a tubular container (T) when said container is in a reading zone.

3. Device according the claim 1,
**characterised in that** said opening (OF) can extend over the entire length of said lateral wall (FL₁) so as to enable the drive means (M) to successively come into contact with the receptacles (T) without requiring any alternating transverse motion of said means (M).

4. Device according to one of the preceding claims,
**characterised in that** said openings (OF) are made on a longitudinal side (FL₁) opposite to the side (FL₂) on which is made said opening and **in that** said openings (OF) extend on a large part of the alveolar cells so as to permit the optical reading of the identification codes of the containers (T) and the inspection of the content of said containers.

5. Device according to one of the preceding claims,
**characterised in that** the carrier unit (R) comes in the form of an alveolar structure of molded material, inscribed within a rectangular parallelepiped comprising two open-worked vertical longitudinal sides (FL₁, FL₂) between which are formed vertical cylindrical alveolar cells (A) intended to house specimen tubes (T), the openings made in one of said sides (FL₁) constituting windows (F) intended to enable both the optical reading of the identification codes borne on the cylindrical walls of the tubes (T) or an inspection of the contents thereof, whereas the openings made in the side (FL₂) comprise a slit-shaped opening (OF) which extends over the entire length of the carrier unit (R).

6. Device according to claim 5,
**characterised in that** the alveolar cells (A) comprise two vertical and rounded bearing elements, and an elastically deformable bearing part (PA) situated on the alveolar cell (A) side opposite the window (F).

7. Device as claimed in claim 6,
**characterised in that** the said bearing elements consist of rotary rollers of vertical axis or furrowed surfaces enabling the tubes to be rotated.

8. Device as claimed in claim 6,
**characterised in that** the bearing part consists of a slightly oblique flexible tab cast integral with the rest of the carrier unit (R).

9. Carrier unit intended to house tubular receptacles whose cylindrical wall bears an identification code intended to be read remotely by an optoelectronic reader to the device according one of the claims 1 to 8,
**characterised in that** it comes in the form of an alveolar structure comprising two vertical longitudinal sides between which are formed vertical cylindrical alveolar cells intended to house the tubular containers, the openings made in one of said sides comprising windows (F) intended to enable both the optical reading of the identification codes and the optical inspection of the contents of the tubular containers, whereas the openings made in the side(FL₂) comprise a slit-shaped opening extending over the entire length of the carrier unit (R).

10. Carrier unit according the claim 9,
**characterised in that** it is cast in one single molded piece.

11. Carrier unit according one of the claims 9 and 10,
**characterised in that** the alveolar cells (A) comprise two rounded vertical bearing elements (PA), as well as an elastically deformable bearing part, situated on the alveolar cell (A) side opposite the window (F).

12. Carrier unit according the claim 11,
**characterised in that** said bearing elements consist of rotary rollers of vertical axis or furrowed surfaces enabling the tubular containers to be rotated.

13. Carrier unit according the claim 11,
**characterised in that** the bearing part consists of a slightly oblique flexible tab cast integral with the rest of the carrier unit.

## Patentansprüche

1. Vorrichtung für das automatische Lesen von Identifizierungscodes, die von rohrförmigen Gefäßen (T) geführt werden, die in senkrechten Zellen (A) eines Einsatzblocks (R) während des Transportes dieser Einsatzblöcke durch einen Förderer (CT) untergebracht sind, wobei diese Vorrichtung die Antriebsmittel der Gefäße im Inneren der besagten Zellen (A) im Laufe einer Ablesephase durch eine Lesevorrichtung (L) intervenieren lässt, **dadurch gekennzeichnet, dass**
- die Lesevorrichtung gegenüber einer der Längsseiten (FL₁) des Einsatzbtocks (R) angeordnet ist
- der Einsatzblock (R) folgendes umfasst:
- einerseits Fenster bildende Durchbrüche (F) die auf besagter Seite (FL₁) hergestellt wurden, um es zu ermöglichen, über die besagte Lesevorrichtung (L) Lesungen der Identifizierungscodes der im Einsatzblock (R) vorhandenen Gefäße (T) vorzunehmen, wenn sich die Fenster (F), die die Sicht dieser Gefäße (T) gestatten, im Feld der Lesevorrichtung (L) befinden
- andererseits eine spaltförmige Öffnung (OF), die sich über die gesamte Länge des Einsatzblocks (R) erstreckt.
- Drehantriebsmittel (M) der Gefäße (T) umfassen ein Antriebsglied, das sich verhältnismäßig in Längsrichtung zur Verschiebungsachse des Einsatzblocks (R) erstreckt und das so beschaffen ist, um durch die genannte Öffnung (OF) hindurch zu führen, um so die Gefäße (T) über der zylindrischen Wand bei der Verschiebung des Einsatzblocks durch den Förderer (CT) zu tragen und so ihren Drehantrieb durch Reibung auf deren zylindrischen Wand im Innern des Einsatzblocks (R) während der Lesephase von deren Codes zu sichern.

2. Vorrichtung nach Anspruch 1, **dadurch gekennzeichnet, dass** die Antriebsmittel aus einer Laufrolle bestehen (M) oder aus einem endlosen Band, das aus einem Material mit hohem Reibungswert hergestellt und angeordnet ist, um an der zylindrischen Wand eines rohrförmigen Gefäßes (T) Halt zu fassen, wenn sich dieses Gefäß in einem Lesebereich befindet.

3. Vorrichtung nach Anspruch 1, **dadurch gekennzeichnet, dass** sich die besagte Öffnung (OF) so über die gesamte Länge der besagten Seitenwand (FL₁) erstreckt, um den folgenden Kontakt der Antriebsmittel (M) auf den Gefäßen (T) zu gestatten, ohne dabei eine alternative Querbewegung der genannten Mittel (M) zu benötigen.

4. Vorrichtung nach einem der vorangehenden Ansprüche, **dadurch gekennzeichnet, dass** die besagten Durchbrüche (OF) auf einer der Seite (FL₂) entgegengesetzten Längsseite (FL₁) gebildet sind, auf welcher die genannte Öffnung hergestellt ist und dass sich die obengenannten Durchbrüche (OF) über einen großen Teil der Zellen erstrecken, um die optische Lesung der Identifizierungscodes der Gefäße (T) sowie die Sichtkontrolle des Inhalts der genannten Gefäße zu gestatten.

5. Vorrichtung nach einem der vorangehenden Ansprüche, **dadurch gekennzeichnet, dass** der Einsatzblock (R) in Form einer zellenartigen Formguss-Struktur vorliegt, eingeordnet in einem rechtwinkligen Parallelepepidon mit zwei durchbrochenen senkrechten Längsseiten FL₁, FL₂), zwischen denen zylindrische Zellen (A) zur Aufnahme von Probegefäßen (T) ausgebildet sind, wobei die Durchbrüche auf einer der besagten Seiten (FL₁) hergestellt sind und wobei die die Fenster (F) bildenden, auf der Seite (FL₂) hergestellten Durchbrüche zur optischen Lesung der von den zylindrischen Wänden der Probegefäße (T) gehaltenen Identifizierungscodes oder zur Sichtkontrolle derer Inhalte bestimmt sind, wobei die auf der Seite (FL₂) hergestellten Durchbrüche eine spaltförmige Öffnung (OF) umfassen, die sich über die gesamte Länge des Einsatzblocks (R) erstreckt.

6. Vorrichtung nach Anspruch 5, **dadurch gekennzeichnet, dass** die Zellen (A) zwei senkrechte und runde Stützelemente sowie ein elastisch verformbares Stützelement (PA) umfassen, das auf der Seite der Zelle (A) gegenüber dem Fenster (F) liegt.

7. Vorrichtung nach Anspruch 6, **dadurch gekennzeichnet, dass** die besagten Stützelemente aus senkrecht ausgerichteten Schwenkrollen oder aus radiären Oberflächen bestehen, womit die Rotation der Gefäße ermöglicht ist.

8. Vorrichtung nach Anspruch 6, **dadurch gekennzeichnet, dass** das Stützelement aus einer leicht abgeschrägten biegsamen Formguss-Lasche mit dem Rest des Einsatzblocks (R) besteht.

9. Einsatzblock zur Aufnahme von rohrförmigen Gefäßen, wobei die zylindrische Wand mit einem Identifizierungscode zur Fernablesung durch ein optoelektronisches Lesegerät versehen ist, im Einvernehmen mit der Vorrichtung nach einem der Ansprüche 1 bis 8, **dadurch gekennzeichnet, dass** dieser in Form einer zellenartigen Struktur mit zwei senkrechten Längsseiten vorliegt, zwischen denen zylindrische Zellen zur Aufnahme der rohrförmigen Gefäße gebildet sind, wobei die auf einer der genannten Seiten hergestellten Durchbrüche mit Fenstern (F) versehen sind, um die optische Lesung der Identifizierungscodes und die Sichtkontrolle des Inhalts der rohrförmigen Gefäße zu gestatten, während die auf der Seite (FL₂) hergestellten Durchbrüche eine Öffnung in Form von einer Spalte umfassen, die sich über die gesamte Länge des Einsatzblocks (R) erstreckt.

10. Einsatzblock nach Anspruch 9, **dadurch gekennzeichnet, dass** dieser in einem einzigen Stück aus Formguss-Material hergestellt ist.

11. Einsatzblock nach einem der Ansprüche 9 und 10, **dadurch gekennzeichnet, dass** die Zellen (A) zwei senkrechte, abgerundete Stützelemente sowie ein elastisch verformbares, auf der Seite der Zelle (A) gegenüber des Fensters (F) liegendes Stützelement (FA) umfassen.

12. Einsatzblock nach Anspruch 11, **dadurch gekennzeichnet, dass** die besagten Stützelemente aus senkrecht ausgerichteten Schwenkrollen oder radiären Oberflächen bestehen, wodurch die Rotation der rohrförmigen Gefäße möglich wird.

13. Einsatzblock nach Anspruch 11, **dadurch gekennzeichnet, dass** das Stützelement aus einer leicht abgeschrägten biegsamen Lasche aus Formguss mit dem Rest des Einsatzblocks (R) besteht.
